# EUROPEAN PATENT APPLICATION

(11) **EP 1 314 549 A1**
(43) Date of publication of application: **28.05.2003**
(21) Application number: 01958564.5
(22) Date of filing: 28.08.2001
(51) Int. Cl.: B32B 27/32, B32B 27/18

(54) **MULTILAYERED DEOXIDIZER AND PRODUCTION PROCESS**

(30) Priority: 28.08.2000 JP 2000257102
(71) Applicant: MITSUBISHI GAS CHEMICAL COMPANY, INC., Tokyo 100-0005 (JP)
(72) Inventor: KASHIBA, Takashi, Hiratsuka-shi, Kanagawa (JP); TAKASHIMA, Masahiko, Hiratsuka-shi, Kanagawa (JP); SEKI, Takahiro, Katsushika-ku, Tokyo 125-0051 (JP)
(74) Representative: Gille Hrabal Struck Neidlein Prop Roos
(86) International application number: JP0107371
(87) International publication number: WO02018140

(57) **Abstract**

The oxygen-absorbing multi-layered structure of the present invention comprises an oxygen-absorbing thermoplastic resin layer containing an oxygen-absorbing composition, and an oxygen-permeable thermoplastic resin layer formed on at least one surface of the oxygen-absorbing layer. The oxygen-permeable layer is a stretched film comprising (A) a matrix polyolefin resin, (B) incompatible thermoplastic resin particles dispersible in the matrix polyolefin resin (A), and (C) inorganic powder. The matrix polyolefin resin (A) has a melting point at least 50°C lower than that of the incompatible thermoplastic resin particles (B). With this oxygen-absorbing layer, the oxygen-absorbing multi-layered structure is improved in oxygen permeability, and is inhibited from being deteriorated in oxygen-absorbing speed even when the film thickness thereof is increased to such an extent as to prevent the exposure of the oxygen-absorbing composition.

## Description

### Technical Field

The present invention relates to a film or a sheet having an oxygen-absorbing capability. More particularly, the invention relates to a oxygen-absorbing multi-layered structure for use in manufacturing an oxygen absorber or an oxygen-absorbing container capable of preventing oxidation of various products, such as foods, pharmaceuticals and metal products, which are likely to be deteriorated in their quality by exposure to oxygen.

### Background Art

Conventionally, oxygen-absorbing agents having an oxygen removing capability have been used in order to prevent oxidation of various products, such as foods, pharmaceuticals and metal products, which are likely to be deteriorated in their quality by exposure to oxygen. Early developed form for using the oxygen-absorbing agents and still widely used is a package prepared by filling a small bag with a granular or powdery oxygen-absorbing composition. As improved oxygen absorbers that are easy to handle, usable in wide applications, and safely used without problems such as eating by mistake, film or sheet forms fixedly containing an oxygen-absorbing composition have been proposed.

The oxygen absorber of film or sheet form is easily produced by compounding a granular or powdery oxygen-absorbing composition with a matrix thermoplastic resin. When the compound oxygen absorber of film or sheet form is directly used, packaged contents, especially liquid contents, are likely to be contaminated by the oxygen-absorbing composition upon contact with the oxygen absorber. To avoid this problem, it is effective to cover the single oxygen-absorbing layer with another shielding layer or shielding wrapper. To make the best use of the properties of film or sheet, a structure wherein the oxygen-absorbing layer is closely covered with the shielding layer is ideal. Such a structure has been proposed, for example, in Japanese Patent Application Laid-Open No. 8-72941.

These oxygen-absorbing films or sheets are prepared by mixing the oxygen-absorbing composition with a resin and, therefore, have a lower oxygen-absorbing speed than that of oxygen-absorbing agents of packet form. To solve this problem, Japanese Patent Application Laid-Open Nos. 9-234811 and 10-264279 disclose a method of producing a multi-layered oxygen-absorbing film or sheet having a high oxygen permeability and being free from exposure and elution of oxygen-absorbing agent by making an oxygen-absorbing layer porous in a stretching process and protecting the upper surface thereof with a non-porous shielding layer.

However, if the shielding layer fails to have a good oxygen permeability, it is limited to attain a good oxygen-absorbing speed even though the oxygen-absorbing layer is stretched into the porous structure. To solve this problem, Japanese Patent Application Laid-Open Nos. 9-234811 and 10-264279 also disclose a method for preventing exposure of the oxygen-absorbing agent to outside without deteriorating the oxygen-absorbing speed by providing a porous layer between the shielding layer and the oxygen-absorbing layer.

### Disclosure of Invention

The thickness of the shielding layer is preferably as thinner as possible to improve its oxygen permeability. However, when the thickness of the shielding layer is reduced, the oxygen-absorbing component in the oxygen-absorbing layer tends to penetrate through the shielding layer into the surface of the multi-layered structure, and the interlaminar strength between the porous layer and the oxygen-absorbing layer may be lowered.

An object of the present invention is to provide an oxygen-absorbing multi-layered structure having a high oxygen-absorbing speed without the bleeding of the oxygen-absorbing component into the surface of the multi-layered structure.

The inventors have found that the oxygen-absorbing multi-layered structure having a high oxygen-absorbing speed without the bleeding of the oxygen-absorbing composition into the surface thereof is obtained by using an oxygen-permeable layer produced by stretching a resin composition comprising (A) a polyolefin resin, (B) incompatible thermoplastic resin particles dispersible in the polyolefin resin (A) and (C) an inorganic powder wherein the combination of the resins (A) and (B) is selected such that the melting point of the polyolefin resin (A) is lower by at least 50°C than that of the incompatible thermoplastic resin particles (B). The present invention has been accomplished based on this finding.

Thus, the present invention is characterized in that the oxygen permeability is improved by a stretched film produced by stretching a resin composition comprising (A) a polyolefin resin, (B) incompatible thermoplastic resin particles dispersible in the polyolefin resin (A) and (C) an inorganic powder wherein the combination of the resins (A) and (B) is selected such that the melting point of the matrix polyolefin resin (A) is lower by at least 50°C than that of the incompatible thermoplastic resin particles (B) dispersible in the matrix resin.

### Best Mode for Carrying Out the Invention

In the present invention, the average particle diameter of the respective particles is determined by measuring diameters of the particles contained in the corresponding layer and calculating an average value of the measured diameters. When the oxygen-absorbing multi-layered structure of the present invention is formed into a packaging container, an oxygen-permeable layer is laminated on one surface of the oxygen-absorbing layer and a low-oxygen permeable gas-barrier layer is laminated on the other. The resultant multi-layered structure is disposed so that the oxygen-permeable layer faces inside of the container and the gas-barrier layer faces outside of the container. The oxygen-permeable layer also acts as a heat seal layer for ensuring the sealing of the container when heat-sealed with either a thermoplastic resin surface layer of a neighboring gas-barrier material or the thermoplastic resin constituting the oxygen-permeable layer of the oxygen-absorbing multi-layered structure.

The oxygen-permeable layer is made of a resin composition containing the polyolefin resin (A) as a matrix. The polyolefin resin (A) preferably has a higher gas permeability, more specifically, has an oxygen permeability of 100 cm³/m²·24hr·atm or higher (25°C, RH90%, 20 µm). Examples of the polyolefin resin include polyolefins such as polyethylene, polypropylene, poly-1-butene and poly-4-methyl-1-pentene; and olefin-based copolymers such as ethylene-vinyl acetate copolymer and ethylene-butene copolymer. Of these resins, preferred are polyethylene, polypropylene, ethylene copolymers and propylene copolymers.

The thermoplastic resin as the matrix resin of the oxygen-permeable layer may include not only polymers obtained by polymerizing single type monomer, but also various copolymers as well as various mixtures of resins. Preferably, the matrix thermoplastic resin is non-polar or low-polar polymer. The matrix thermoplastic resin of the oxygen-permeable layer is preferably the same thermoplastic resin as the matrix component of the oxygen-absorbing layer. If a different resin is used, preferred is a thermoplastic resin that is compatible with the matrix thermoplastic resin of the oxygen-absorbing layer to such an extent that both are capable of being heat-fused together.

Examples of the resin for the oxygen-permeable layer include homo- and copolymers of olefins such as ethylene, propylene, 1-butene and 4-methyl-1-pentene; ethylene-vinyl acetate copolymer; polybutadiene; polyisoprene; styrene-butadiene copolymer and hydrogenated products thereof; and various silicone resins as well as modified products, grafted products and mixtures of these polymers. When the oxygen-permeable layer acts as a heat seal layer, olefin resins such as, especially, polypropylene, polyethylene, ethylene copolymers and propylene copolymers are preferred in view of heat sealability.

The incompatible thermoplastic resin (B) used in the oxygen-permeable layer is substantially incompatible with the matrix polyolefin resin of the oxygen-permeable layer, but dispersible therein. The incompatible thermoplastic resin itself is not necessarily required to exhibit a good gas permeability. However, the incompatible thermoplastic resin preferably exhibits a good gas permeability like the matrix resin because the gas permeability of a resulting gas-permeable stretched film as a whole can be further enhanced.

Examples of the resin include polyolefins such as polyethylene, polypropylene, poly-1-butene and poly-4-methyl-1-pentene; polydienes such as polybutadiene and polyisoprene, and hydrogenated products thereof; aromatic resins such as polystyrene; various silicone resins; various fluororesins; polyesters such as polyethylene terephthalate, polybutylene terephthalate and polyethylene naphthalate; nylons such as 6 nylon, MXD6 nylon and 66 nylon; polycarbonates; polyphenylene ether; polyacetal; polyphenylene sulfide; liquid crystal polymers; polysulfones; polyether sulfones; polyether ether ketones; and polyamide imides; and polyether imides, as well as copolymers such as ethylene-vinyl acetate copolymer, ethylene-butene copolymer and styrene-butadiene copolymer, and resin compositions of two or more resins such as ABS resin.

The incompatible resin itself is not necessarily required to have a good oxygen permeability since the oxygen permeability can be improved by cracks formed in the oxygen-permeable layer. However; the incompatible resin is preferably a thermoplastic resin having a good oxygen permeability in view of the oxygen permeability of the oxygen-permeable layer as a whole. Also, the incompatible resin preferably has a larger hardness than that of the matrix resin of the oxygen-permeable layer for effectively preventing the oxygen-absorbing composition from penetrating through the oxygen-permeable layer.

The average particle diameter of the incompatible resin is preferably 0.1 to 100 µm, more preferably 1 to 50 µm.

When the average particle diameter of the incompatible resin is less than 0.1 µm, the cracks formed along the interface between the resins upon stretching become small to reduce the effect. When more than 100 µm, the cracks are formed scatteredly along the interface between the resins upon stretching to reduce the strength of the oxygen-permeable layer. The amount of the incompatible resin added is preferably 1 to 50% by weight, more preferably 3 to 30% by weight. When the amount is too small, the effect of forming cracks is insufficient. When the amount is too large, the resin fails to have an adequate dispersion particle size, or continuous cracks are formed so that the oxygen-absorbing composition tends to migrate through the oxygen-permeable layer into contents being packaged.

The combination of the matrix polyolefin resin (A) and the incompatible thermoplastic resin (B) dispersible in the matrix polyolefin resin which meets the above requirements should satisfy a condition that the melting point of the polyolefin resin is lower by at least 50°C than that of the incompatible thermoplastic resin.

Further, the combination of the matrix polyolefin resin (A) and the incompatible thermoplastic resin (B) dispersible in the matrix polyolefin resin is selected such that the softening point of the polyolefin resin is lower preferably by at least 50°C, more preferably by at least 100°C, than that of the incompatible thermoplastic resin.

Of these combinations of resins satisfying the above conditions, preferred is the use of polyethylene or polypropylene as the matrix thermoplastic resin in combination with poly-4-methylpenten-1, polyester, nylon, polycarbonate or polyacetal as the incompatible resin; more preferred is the use of low-density polyethylene or polypropylene as the matrix thermoplastic resin in combination with poly-4-methylpenten-1 as the incompatible resin; and most preferred is the use of low-density polyethylene, linear low-density polyethylene or metallocene-catalyzed low-density polyethylene as the matrix thermoplastic resin in combination with poly-4-methylpenten-1 as the incompatible resin.

More specifically, the combination of polyethylene, polypropylene, ethylene copolymer or propylene copolymer as the matrix polyolefin resin, and poly-4-methylpenten-1, polyester, nylon, polycarbonate or polyacetal as the incompatible thermoplastic resin is preferred; the combination of polyethylene or polypropylene as the matrix polyolefin resin, and poly-4-methylpenten-1 or copolymer thereof as the incompatible thermoplastic resin is more preferred; and the combination of low-density polyethylene, linear low-density polyethylene, metallocene-catalyzed low-density polyethylene or polypropylene as the matrix polyolefin resin, and poly-4-methylpenten-1 as the incompatible thermoplastic resin is most preferred.

The average dispersion particle diameter of the incompatible thermoplastic resin particles dispersed in the matrix resin is 0.1 to 100 µm, preferably 1 to 50 µm, more preferably 5 to 25 µm. By the stretching operation, cracks are produced along the interface between the matrix resin and the incompatible thermoplastic resin to form voids around the incompatible thermoplastic resin particles dispersed in the matrix resin, resulting in the improvement of the gas permeability. When the average dispersion particle diameter is less than 0.1 µm, the voids formed around the incompatible thermoplastic resin particles upon stretching become too fine, resulting in poor oxygen permeable effect. When more than 100 µm, the voids are formed scatteredly around the incompatible thermoplastic resin particles upon stretching become, also resulting in poor oxygen permeable effect.

The average dispersion particle diameter of the incompatible thermoplastic resin particles in the gas-permeable stretched film of the present invention was determined by measuring diameters of 10 or more particles on a cross-sectional microphotograph (magnification: x 1,000 to 50,000) of the film and calculating an average value of the measured diameters. If the particles was ellipsoidal, the major axis was used to determine the average dispersion particle diameter.

The amount of the incompatible thermoplastic resin (B) to be blended is preferably 1 to 50% by weight, more preferably 3 to 40% by weight based on the total weight of the thermoplastic resin components (A) and (B). When the amount is below the above range, voids are not sufficiently formed along the interface between the resins upon stretching, failing to attain excellent oxygen permeability. When the amount exceeds the above range, the incompatible thermoplastic resin particles fail to have an adequate dispersion particle diameter, or voids are continuously connected with each other so that the liquid in the contents may penetrate to reach the oxygen-absorbing layer.

The gas-permeable stretched film of the present invention contains, in addition to the resin components, (C) an inorganic powder that is incompatible with both the matrix resin and the incompatible thermoplastic resin. A part of the blended inorganic powder is interposed at the interface between the matrix resin and the incompatible thermoplastic resin to reduce the friction between the resins, thereby facilitating the effective formation of voids around the incompatible thermoplastic resin upon stretching.

By adding the inorganic powder, as the third component of the oxygen-permeable layer, which has an average particle diameter smaller than that of the incompatible thermoplastic resin, the formation of cracks along the interface can be promoted. The inorganic powder used in the present invention is preferably incompatible with both the matrix resin and the incompatible thermoplastic resin of the oxygen-permeable layer. The average particle diameter of the inorganic powder is preferably 0.01 to 10 µm and also preferably smaller than that of the incompatible thermoplastic resin dispersed in the oxygen-permeable layer.

A part of the added inorganic powder is distributed near the interface between the matrix resin and the incompatible thermoplastic resin of the oxygen-permeable layer to reduce the affinity and adhesion force between these resins. As a result, cracks are effectively formed along the interface between the matrix resin and the incompatible thermoplastic resin by the stretching the oxygen-permeable layer.

The amount of the inorganic powder (C) to be blended is preferably 1 to 50% by weight, more preferably 3 to 30% by weight based on the total weight of the resin components. The weight ratio of the inorganic powder to the incompatible thermoplastic resin is usually 0.1 to 1, preferably 0.3 to 0.7. When the weight ratio lies in the above range, the resulting gas-permeable stretched film exhibits a high oxygen permeability.

The average particle diameter of the inorganic powder is preferably 0.001 to 10,µm, more preferably 0.01 to 10 µm, most preferably 0.1 to 5 µm. In addition, the average particle diameter of the inorganic powder is preferably smaller than that of the incompatible thermoplastic resin because the formation of voids along the interface between the resins upon stretching is further promoted. The average particle diameter of the inorganic powder is determined by measuring diameters of 10 or more particles on a cross-sectional microphotograph (magnification: x1,000 to 50,000) of the resulting film and calculating an average value of the measured diameters. When the inorganic powder is ellipsoidal, the major axis is used to determine the average particle diameter.

Thus, the inorganic powder is preferably made of an inorganic material exhibiting no affinity to both the matrix thermoplastic resin and the incompatible thermoplastic resin of the oxygen-permeable layer.

Examples of the inorganic powder include titanium oxide, calcium carbonate, magnesium carbonate, magnesium hydroxide, zinc oxide, calcium hydroxide, calcium oxide, gypsum, calcium sulfate, calcium phosphate, magnesium carbonate, magnesium sulfate, hydrated silicic acid, anhydrous silicic acid, soda ash, sodium chloride, sodium sulfate, barium sulfate, calcium silicate, talc, mica, glass flakes, glass beads, zeolite, alumina, silica, silica gel, clay, various cements, volcanic ash, shirasu, iron oxide, carbon black, activated carbon, diatomaceous earth, and various clay minerals. These inorganic powders may be used alone or in combination of two or more. Of these inorganic powders, titanium oxide particles are most preferred because of fine particle diameter, high safety and hygiene, low cost, etc.

The oxygen-permeable layer of the present invention may further contain an additional resin other than the polyolefin resin and the incompatible thermoplastic resin unless properties of the oxygen-permeable layer are adversely affected. Examples of the additional resins include polydienes such as polybutadiene and polyisoprene, and hydrogenated products thereof; aromatic resins such as polystyrene; various silicone resins; various fluororesins; polyesters such as polyethylene terephthalate, polybutylene terephthalate and polyethylene naphthalate; nylons such as 6 nylon, MXD6 nylon and 66 nylon; other resins such as polycarbonates, polyphenylene ether, polyacetal, polyphenylene sulfide, liquid crystal polymers, polysulfones, polyether sulfones, polyether ether ketones, polyamide imides and polyether imides; copolymers such as styrene-butadiene copolymer and ABS resin; and resin compositions.

In addition to the matrix polyolefin resin, the incompatible thermoplastic resin and the inorganic powder, the oxygen-permeable layer may also contain, if required, various additives such as colorant, plasticizer, antistatic agent, heat seal modifier, flame retardant and deodorant unless the properties of the gas-permeable stretched film are adversely affected.

Further, an adhesive layer made of polyolefin, etc. or another layer may be disposed between the oxygen-absorbing layer and the oxygen-permeable layer.

The incompatible thermoplastic resin and the inorganic particles as well as the other optional components may be added to the oxygen-permeable layer by any suitable methods without particular limitation. For example, these components may be kneaded together to form a master batch. Alternatively, after heat-melting the matrix thermoplastic resin, the other components may be added and mixed to the molten matrix resin. In any methods, the mixing procedure is preferably performed at a temperature at which both the matrix resin and the incompatible thermoplastic resin to be dispersed therein are melted.

The oxygen-permeable layer is formed by stretching the film containing the oxygen-permeable layer at a temperature ranging from a temperature 30°C lower than the softening point of the matrix polyolefin resin (A) to a temperature 10°C higher than the softening point of the matrix resin, and also not higher than the softening point of the incompatible thermoplastic resin (B) dispersed in the matrix resin. The stretching process is preferably conducted at a temperature ranging from a temperature 20°C lower than the softening point of the matrix polyolefin resin (A) to the softening point of the matrix resin, and being not higher than the softening point of the incompatible thermoplastic resin (B).

For example, after a master batch obtained by kneading the matrix polyolefin resin with the incompatible thermoplastic resin and the inorganic powder is formed into a film, the resulting film is stretched together with, if required, the oxygen-absorbing layer laminated thereon. The kneading procedure is preferably performed at a temperature higher than both the melting points of the matrix polyolefin resin and the incompatible thermoplastic resin to be dispersed in the matrix resin. The film may be stretched together with, if required, an additional layer laminated thereon.

Alternatively, a film obtained by adding the incompatible thermoplastic resin particles and the inorganic powder to a molten film of the matrix polyolefin resin may be stretched together with, if required, an additional film laminated thereon. Moreover, after adding the inorganic powder (or the incompatible thermoplastic resin particles) to a molten master batch film formed by adding the incompatible thermoplastic resin particles (or the inorganic powder) to a molten film of the matrix polyolefin resin, the resulting film may be stretched together with, if required, an additional film laminated thereon.

The stretching of the oxygen-permeable layer may be carried out by any known methods such as monoaxial stretching, simultaneous biaxial stretching and sequential biaxial stretching. The stretch ratio is preferably 1.2 to 20 times, more preferably 1.5 to 10 times, most preferably 1.7 to 8 times in terms of an area ratio (ratio of the area of stretched film to the area before stretching). When the stretch ratio is below the above range, the formation and growth of voids are insufficient. When the stretch ratio exceeds the above range, the mechanical strength of the film is reduced.

The temperature of the oxygen-permeable layer of the film preferably ranges from a temperature 30°C lower than the softening point of the matrix polyolefin resin (A) to a temperature 10°C higher than the softening point, and being not higher than the softening point of the incompatible thermoplastic resin particles (B) to be dispersed in the matrix resin, more preferably ranges from a temperature 20°C lower than the softening point of the matrix resin to the softening point, and being not higher than the softening point of the incompatible thermoplastic resin particles (B) to be dispersed in the matrix resin.

The oxygen-permeable layer of the present invention has voids having an average length of 1 to 200 µm, preferably 10 to 100 µm in the interface between the matrix polyolefin resin and the incompatible thermoplastic resin particles. The average length of the voids is determined by measuring the lengths of 10 or more voids in the stretching direction on a cross-sectional microphotograph (magnification: x1,000 to 50,000) of the film, and calculating an average value of the measured lengths. If a void extends to an adjacent incompatible thermoplastic resin particle, the distance between the particles is used as the length of the void.

With such voids, the oxygen-permeable layer exhibits a high gas permeability represented by an oxygen permeability of 20,000 cm³/m²·24hr·atm or higher (25°C, RH50%, 50 µm) as measured by differential pressure method according to JIS K7126.

The thickness of the oxygen-permeable layer may vary depending upon the intended performance expressed by the oxygen permeability of the object to be deoxygenated and the oxygen permeability coefficients of the resins, and is preferably 5 to 100 µm, more preferably 10 to 80 µm, and most preferably 20 to 60 µm.

The oxygen-permeable layer of the present invention has a thickness of preferably 5 to 200 µm, more preferably 10 to 100 µm, and most preferably 20 to 80 µm.

The air-permeable stretched film of the present invention may be heat-fused to another film of the same type or a heat seal layer made of polyolefin, etc. of another gas-permeable or gas-impermeable film.

The air-permeable stretched film excellent in the liquid resistance, which comprises the polyolefin resin (A), the incompatible thermoplastic resin particles (B) to be dispersed in the resin (A) and the inorganic powder (C) and has voids formed along the interface between the polyolefin resin and the incompatible thermoplastic resin particles upon stretching, may be made into a laminated film by laminating another gas-permeable film or a reinforcing material on one or both surfaces thereof. As the film to be laminated, there may be used gas-permeable films such as perforated plastic films, fine porous plastic films, non-woven fabric and paper and gas-permeable laminated films composed of two or more thereof.

As the oxygen-absorbing composition to be incorporated into the oxygen-absorbing layer, there may be used known oxygen-absorbing compositions, e.g., a solid oxygen-absorbing composition or a liquid oxygen-absorbing composition carried on a suitable granular substance. Also, the oxygen-absorbing layer may contain a slightly water-soluble or water-insoluble inorganic filler as an aid for making the layer porous.

Examples of the preferred oxygen-absorbing composition to be used in the oxygen-absorbing layer include those compositions containing, as main component, metal powders such as iron powder, aluminum, powder and silicon powder; inorganic salts such as iron(I) salt; ascorbic acid or salts thereof; alcohols or phenols such as catechol, gallic acid and glycerin; unsaturated hydrocarbons such as butadiene and isobutylene; unsaturated fatty acids such as tall oil and soybean oil; and organic compounds having an unsaturated bond. Of these compositions, especially preferred are compositions composed of iron powder and halogenated metal salts.

The oxygen-absorbing composition preferably has a maximum particle diameter less than the thickness of the oxygen-absorbing layer. The particle diameter of the oxygen-absorbing composition is preferably as small as possible in order to attain a higher oxidation speed and prevent other layers from being damaged by penetration therethrough. More specifically, the maximum particle diameter is preferably 200 µm or smaller, more preferably 100 µm or smaller. In order to increase the oxygen speed while maintaining a good mechanical strength of the oxygen-absorbing layer, the amount of the oxygen-absorbing composition in the oxygen-absorbing layer is preferably 10 to 60% by weight, more preferably 30 to 55% by weight. The oxygen-absorbing layer may be stretched so as to render it porous.

Any resin may be used in the oxygen-absorbing layer without particular limitation as long as the oxygen-absorbing composition such as iron powder or the slightly water-soluble inorganic filler is readily mixed and dispersed therein, and may be selected by considering the compatibility with the oxygen-permeable layer or the temperature range for using the oxygen-absorbing laminated film or sheet.

Examples of the resins for the oxygen-absorbing layer include homopolymer or copolymers of olefins such as ethylene, propylene, 1-butene and 4-methyl-1-pentene, ethylene-vinyl acetate copolymer, polybutadiene, polyisoprene, styrene-butadiene copolymers, hydrogenated products of these polymers, and various silicone resins as well as modified products, grafted products or mixture thereof.

The resin for the oxygen-absorbing layer is preferably compatible with the adjacent layers. More preferably, the oxygen-absorbing layer comprises the same resin as used in the oxygen-permeable layer and is directly laminated thereto.

The thickness of the oxygen-absorbing layer is preferably 10 to 200 µm, more preferably 20 to 150 µm, and most preferably 30 to 100 µm.

The oxygen-absorbing multi-layered structure preferably has a structure having a low-oxygen permeable gas-barrier layer on the surface of the oxygen-absorbing layer opposite to the surface having the oxygen-permeable layer provided. That is, one preferred embodiment of the oxygen-absorbing multi-layered structure of the present invention is an oxygen-absorbing laminated film comprising the oxygen-absorbing layer, the oxygen-permeable layer laminated on one surface of the oxygen-absorbing layer, and the gas-barrier layer laminated on the other surface.

The gas-barrier layer is made of a gas-barrier material, and acts for preventing oxygen from entering into a container from outside. Examples of materials for the gas-barrier layer include polyesters such as polyethylene terephthalate; polyamides such as nylon 6 and nylon MXD6; chlorine-containing resins such as polyvinyl chloride and polyvinylidene chloride; low-oxygen permeable resins such as ethylene-vinyl alcohol copolymer; coated products of these materials; metal foils such as aluminum; metal-deposited resins; and resins deposited with inorganic compounds such as silicon oxide.

When the oxygen-absorbing multi-layered structure is formed into a packaging container, the oxygen-permeable layer is disposed so as to face the contents of the container, and the gas-barrier layer is disposed so as to face the surrounding outside air. The oxygen-permeable layer may also act as a heat seal layer. Further, a heat seal layer made of a polyolefin resin solely may be laminated on the surface of the oxygen-permeable layer to enhance a sealing strength.

The material for each layer may further contain another additive as long as the oxygen-absorbing speed of the oxygen-absorbing film or sheet and the prevention of the migration of the oxygen-absorbing composition can be maintained, and further, the additive does not cause a new problem of migration. Examples of such additives include pigments and dyes for coloring and hiding, stabilizing components for preventing oxidation and degradation, antistatic components, moisture-absorbing components, deodorant components, plasticizer components, flame retardant components or the like. Further, the oxygen-absorbing multi-layered structure may further comprise a printed layer, an easy-opening layer or an easy-releasing layer unless properties of the oxygen-absorbing film or sheet are adversely affected.

The respective layers of the oxygen-absorbing multi-layered structure may be laminated together by any known methods such as ordinary co-extrusion, extrusion-coating and extrusion-lamination.

The stretching may be carried out by ordinarily known methods such as monoaxial stretching, simultaneous biaxial stretching and sequential biaxial stretching. The stretch ratio is preferably 2 to 20 times.

The oxygen-absorbing layer may be laminated on the stretched oxygen-permeable layer by adhesion, melt-bonding or vapor deposition. Alternatively, after stretching the oxygen-absorbing layer and the oxygen-permeable layer separately, both the layers may be laminated one on the other by adhesion, melt-bonding or vapor deposition. An oxygen-absorbing multi-layered structure having oxygen-permeable layers on both the surfaces of an oxygen-absorbing layer may be prepared by laminating two previously stretched oxygen-permeable layers on both the surfaces of an oxygen-absorbing layer by adhesion, melt-bonding or vapor deposition, or alternatively, by laminating two previously stretched oxygen-permeable layers on both the surfaces of a previously stretched oxygen-absorbing layer by adhesion, melt-bonding or vapor deposition.

If the gas-barrier layer is a resin-containing layer, the stretching operation may be conducted after laminating the oxygen-permeable resin layer, the oxygen-absorbing layer and the gas-barrier layer. When the gas-barrier layer is made of a non-stretchable material such as metal foil and metal-deposited film, such a gas-barrier layer may be laminated by ordinary methods for adhesion or melt-bonding such as heat lamination, dry lamination and extrusion-coating to form a final multi-layered structure.

The oxygen-absorbing multi-layered structure of the present invention, when exhibiting a gas-barrier property on one surface and an oxygen-absorbing property on the other surface, may be used as an oxygen-absorbing packaging material, for example, by made into various shapes for entirely or partly constituting a packaging bag or a container according to the intended properties. For example, the oxygen-absorbing multi-layered structure is made into a top-seal film of a packaging container or whole part of a packaging bag. The contents to be stored may include solids, liquids, and mixtures of solid and liquid. Also, an oxygen-absorbing multi-layered structure having its both surfaces made into oxygen-permeable may be used as an oxygen-absorbing agent with or without packed with an air-permeable packaging material.

The present invention will be described in more detail with reference to the following examples and comparative examples. However, these examples are only illustrative and not intended to limit the scope of the present invention thereto. The average diameter of the respective particles of the resin composition was determined by measuring diameters of 10 or more particles on a cross-sectional microphotograph (magnification: x1,000 to 5,000) of the resin composition, and calculating an average value of the measured diameters. When the particles were ellipsoidal, the major axis thereof was used to determine the average particle diameter.

### EXAMPLE 1

An aqueous solution containing 2 parts by weight of calcium chloride was sprayed to 100 parts by weight of iron powder having a maximum particle diameter of about 50 µm, and dried under heating to obtain an oxygen-absorbing composition. The resulting oxygen-absorbing composition, calcium oxide, a metallocene-catalyzed linear low-density polyethylene (tradename: "SP2040" available from Mitsui Chemicals, Inc.; melt flow rate: 4.0 g/10 min; melting point: 116°C) were dry-blended. The resulting mixture was kneaded in a 30mmφ twin-screw extruder, extruded through a strand die, cooled, and then cut by a pelletizer to obtain pellets of an oxygen-absorbing resin composition. The oxygen-absorbing resin composition contained 50% by weight of the oxygen-absorbing composition, 2% by weight of calcium oxide and 48% by weight of the linear low-density polyethylene.

The same linear low-density polyethylene as used in preparing the oxygen-absorbing resin composition, a poly-4-methylpenten-1 resin (tradename: "DX845" available from Mitsui Chemicals, Inc.; melt flow rate: 7 to 11 g/10 min; melting point: 236°C) and titanium oxide powder (tradename: "SR-1" available from Sakai Kagaku Kogyo Co., Ltd.; average particle diameter: 0.25 µm) were mixed in a weight ratio of 70:20:10 in the same manner as above to prepare white pellets. The obtained white pellets and the pellets of the oxygen-absorbing resin composition were co-extruded into a two-layered intermediate laminate comprising an oxygen-permeable layer (120 µm) and an oxygen-absorbing layer (150 µm).

The intermediate laminate was stretched 5 times (area ratio: 4.5 times) to obtain an oxygen-absorbing laminate. The thicknesses of the oxygen-permeable layer and the oxygen-absorbing layer of the stretched laminate were 40 µm and 50 µm, respectively. Then, an aluminum foil was adhesively dry-laminated to the oxygen-absorbing layer using an urethane adhesive (composition containing "A-515" (tradename) and a curing agent "A-50" (tradename) both available from Takeda Chemical Industries, Ltd.; mixing ratio: 10:1) to obtain an oxygen-absorbing laminated film. The iron powder in the oxygen-absorbing layer of the obtained oxygen-absorbing laminated film was fully hidden under the surface of the oxygen-permeable layer, and the protrusion to the surface of the multi-layered film was not observed. Also, the result of the cross-sectional observation of the oxygen-absorbing laminated film by a scanning electron microscope (SEM) showed that the average particle diameters of polymethylpentene and titanium oxide dispersed in the oxygen-permeable layer were respectively 10 µm and 0.25 µm, and the average length of voids formed at the interface between the linear low-density polyethylene and poly-4-methylpenten-1 resin was 20 µm.

Two sheets of the oxygen-absorbing laminated film was stacked and formed into a four-side sealing square bag of 10 cm x 10 cm size. The thus obtained bag was filled with absorbent cotton impregnated with water and 200 cc of air, and then tightly sealed by heat-sealing at the surfaces of the oxygen-permeable layers. The change of oxygen concentration with time in the four side-sealed bag was measured at 25°C using a gas chromatograph "GC-14B" available from Shimadzu Corporation to determine a time required until the oxygen concentration reached 0.1% by volume (hereinafter referred to as "oxygen-absorbing time") and evaluate the oxygen-absorbing speed. The oxygen-absorbing time was 20 h.

### EXAMPLE 2

A stretched oxygen-absorbing multi-layered film and a stretched oxygen-absorbing laminated film were produced by the same method as in Example 1 except for changing the composition of the oxygen-permeable layer to linear low-density polyethylene : polymethylpentene : titanium oxide = 70:10:20 by weight. The iron powder in the oxygen-absorbing layer of the obtained oxygen-absorbing laminated film was fully hidden under the surface of the film, and the protrusion to the surface of the film was not observed. Also, the result of the cross-sectional observation of the oxygen-absorbing multi-layered film by a scanning electron microscope (SEM) showed that the average particle diameters of polymethylpentene and titanium oxide dispersed in the oxygen-permeable layer were respectively 10 µm and 0.25 µm, and the average length of voids formed at the interface between the linear low-density polyethylene and poly-4-methylpenten-1 resin was 20 µm. The oxygen-absorbing time of the oxygen-absorbing laminated film was 20 h.

### EXAMPLE 3

A stretched oxygen-absorbing multi-layered film and a stretched oxygen-absorbing laminated film were produced by the same method as in Example 1 except for changing titanium oxide powder to calcium carbonate powder (tradename: "P-30" available from Shiraishi Kogyo Co., Ltd.; average particle diameter: 4.3 µm), and changing the composition of the oxygen-permeable layer to linear low-density polyethylene : polymethylpentene : calcium carbonate = 70:20:10 by weight. The iron powder in the oxygen-absorbing layer of the obtained oxygen-absorbing laminated film was fully hidden under the surface of the film, and the protrusion to the surface of the film was not observed. Also, the result of the cross-sectional observation of the oxygen-absorbing laminated film by a scanning electron microscope (SEM) showed that the average particle diameters of polymethylpentene and calcium carbonate dispersed in the oxygen-permeable layer were respectively 10 µm and 4.3 µm, and the average length of voids formed at the interface between the linear low-density polyethylene and poly-4-methylpenten-1 resin was 40 µm. The oxygen-absorbing time of the oxygen-absorbing laminated film was 50 h.

### EXAMPLE 4

The incompatible resin to be incorporated into the oxygen-permeable layer was changed from polymethylpentene to MX nylon (tradename: "6007" available from Mitsubishi Gas Chemical Company, Inc.; melt flow rate: 2.0 g/10 min; melting point: 243°C), and the weight ratio of linear low-density polyethylene : MX nylon : titanium oxide was set to 70:20:10 as in Example 1. A 150 µm-thick oxygen-permeable layer comprising the resin composition was laminated on a previously prepared sheet of a 150 µm-thick oxygen-absorbing layer by an extrusion lamination. The resulting laminate was stretched 4.5 times in the same manner as in Example 1 to produce an oxygen-absorbing multi-layered film and an oxygen-absorbing laminated film.

The iron powder in the oxygen-absorbing layer of the obtained oxygen-absorbing laminated film was fully hidden under the surface of the film, and the protrusion to the surface of the film was not observed. Also, the result of the cross-sectional observation of the oxygen-absorbing multi-layered film by a scanning electron microscope (SEM) showed that the average particle diameters of MX nylon and titanium oxide dispersed in the oxygen-permeable layer were respectively 10 µm and 0.25 µm, and the average length of voids formed at the interface between the linear low-density polyethylene and MX nylon resin was 10 µm. The oxygen-absorbing time of the oxygen-absorbing laminated film was 45 h.

### EXAMPLE 5

An aqueous solution containing 2 parts by weight of sodium chloride was sprayed to 100 parts by weight of iron powder having a maximum particle diameter of about 50 µm, and dried under heating to obtain an oxygen-absorbing composition. After dry-blending the resulting oxygen-absorbing composition, calcium oxide, activated carbon, the above linear low-density polyethylene, and a metallocene-catalyzed linear low-density polyethylene (tradename: "KC570S" available from Nihon Polychem Co., Ltd.; melt flow rate: 11.0 g/10 min; melting point: 116°C), pellets of the oxygen-absorbing resin composition were prepared in the same manner as in Example 1. The oxygen-absorbing resin composition contained 40% by weight of the oxygen-absorbing composition, 2% by weight of calcium oxide, 3% by weight of activated carbon, 35% by weight of the linear low-density polyethylene, and 20% by weight of the metallocene-catalyzed linear low-density polyethylene.

A stretched oxygen-absorbing multi-layered film and a stretched oxygen-absorbing laminated film were prepared in the same manner as in Example 4 except for changing the incompatible resin to be incorporated into the oxygen-permeable layer to an equiweight mixture of polymethylpentene and MX nylon, and setting the weight ratio of linear low-density polyethylene : polymethylpentene : MX nylon : titanium oxide to 50:15:20:10.

The iron powder in the oxygen-absorbing layer of the obtained oxygen-absorbing laminated film was fully hidden under the surface of the film, and the protrusion to the surface of the film was not observed. Also, the result of the cross-sectional observation of the oxygen-absorbing multi-layered film by a scanning electron microscope (SEM) showed that the average particle diameters of polymethylpentene, MX nylon and titanium oxide dispersed in the oxygen-permeable layer were respectively 10 µm, 10 µm and 0.25 µm, and the average length of voids formed at the interface between the linear low-density polyethylene and poly-4-methylpenten-1 resin or MX nylon resin was 20 µm. The oxygen-absorbing time of the oxygen-absorbing laminated film was 50 h.

### EXAMPLE 6

A stretched oxygen-absorbing multi-layered film was produced in the same manner as in Example 1 except for forming the oxygen-permeable layer having a thickness of 45 µm by extruding the same resin composition as used in Example 1 into a 150 µm-thick single layer film which was then monoaxially stretched 6 times (area ratio: 5 times);. forming an oxygen-absorbing layer having a thickness of 30 µm by extrusion-laminating the same oxygen-absorbing resin composition pellets as prepared in Example 1 on the oxygen-permeable layer; and subjecting the surface of the oxygen-absorbing layer to corona discharge treatment. The obtained stretched oxygen-absorbing multi-layered film was of a two-layer structure of the oxygen-permeable layer and the oxygen-absorbing layer. Further, a printed nylon layer and an alumina-deposited PET film were dry-laminated on the oxygen-absorbing layer to obtain an oxygen-absorbing multi-layered film and an oxygen-absorbing laminated film.

The obtained oxygen-absorbing laminated film was constituted by the oxygen-permeable layer (45 µm), oxygen-absorbing layer (30 µm), nylon layer, printed layer (15 µm), and alumina-deposited PET layer (12 µm).

The oxygen-absorbing laminated film was cut into a size of 10 cm x 8 cm. A 10 cm x 8 cm film composed of a 40 µm-thick LLDP layer, a 15 µm-thick nylon layer and a 12 µm-thick alumina-deposited PET layer was laminated on one surface of the cut film. The resulting multi-layered film was heat-sealed to form a three-side sealed bag, into which one piece of cut rice cake (80 g) was placed and then the bag was fully sealed. After storing at 23°C for one day, the oxygen concentration within the bag was 0.1% or lower. Further, after storing at 23°C for 3 months, the appearance of the rice cake in the bag was observed. The rice cake was free from getting moldy and ill-smelling.

### EXAMPLE 7

The thermoplastic resin for the oxygen-absorbing layer was changed to a metallocene-catalyzed linear low-density polyethylene ("SP2040" available from Mitsui Chemicals, Inc.), and an oxygen-absorbing resin composition containing 45% by weight of the oxygen-absorbing composition, 53% by weight of the thermoplastic resin and 2% by weight of calcium oxide was used.

The composition for the oxygen-permeable layer contained 70% by weight of a metallocene-catalyzed linear low-density polyethylene ("SP0540" available from Mitsui Chemicals, Inc.; MFR: 4.0 g/10 min; density: 0.905 g/cm³; melting point: 93°C), 20% by weight of polymethylpentene ("DX845" available from Mitsui Chemicals, Inc.; MFR: 9.0 g/10 min; density: 0.833 g/cm³; melting point: 236°C) and 10% by weight of the same titanium oxide powder as used in Example 1 (tradename: "SR-1" available from Sakai Kagaku Kogyo Co., Ltd.; average particle diameter: 0.25 µm). The oxygen-permeable layer and the oxygen-absorbing layer were laminated by co-extrusion. The resultant laminate was stretched 6 to 6.5 times (area ratio: 5.5 to 6 times) to obtain a stretched oxygen-absorbing multi-layered film, while following the same manner as in Example 1 in the other procedures. The result of the cross-sectional observation of the oxygen-absorbing multi-layered film by a scanning electron microscope (SEM) showed that the average length of voids formed at the interface between the linear low-density polyethylene and poly-4-methylpenten-1 resin in the oxygen-permeable layer was 40 µm. The oxygen-absorbing time of the oxygen-absorbing laminated film prepared by laminating an aluminum foil on the oxygen-absorbing multi-layered film was 23 h.

### COMPARATIVE EXAMPLE 1

A stretched oxygen-absorbing multi-layered film and a stretched oxygen-absorbing laminated film were produced by the same method as in Example 1 except for forming the oxygen-permeable layer from the linear low-density polyethylene solely without adding polymethylpentene and titanium oxide. Although no iron powder protrusion to the surface of the oxygen-absorbing laminated film was observed, the oxygen-absorbing time was 500 h.

### COMPARATIVE EXAMPLE 2

A stretched oxygen-absorbing multi-layered film and a stretched oxygen-absorbing laminated film were produced by the same method as in Example 1 except for changing the composition of the oxygen-permeable layer to linear low-density polyethylene : titanium oxide = 90:10 by weight without adding polymethylpentene. Although no iron powder protrusion to the surface of the oxygen-absorbing laminated film was observed, the oxygen-absorbing time was 300 h.

### COMPARATIVE EXAMPLE 3

A stretched oxygen-absorbing multi-layered film and a stretched oxygen-absorbing laminated film were produced by the same method as in Example 3 except for using as inorganic particles, granular calcium carbonate (tradename: "R-Jutan" available from Maruo Calcium Co., Ltd.; average particle diameter: 20 µm). Although no iron powder protrusion to the surface of the oxygen-absorbing laminated film was observed, the oxygen-absorbing time was 300 h.

Further, the result of the cross-sectional observation of the oxygen-absorbing laminated film by a scanning electron microscope showed that the average particle diameters of dispersed polymethylpentene and calcium carbonate were 10 µm and 20 µm, respectively.

### Industrial Applicability

A oxygen-absorbing multi-layered structure or an oxygen-absorbing laminated film produced according to the present invention exhibits a high oxygen-absorbing speed while preventing an oxygen-absorbing composition such as iron powder contained in an oxygen-absorbing layer thereof from being exposed on the surface thereof. Further, the deterioration of the interlaminar strength between a porous layer and the oxygen-absorbing layer can be avoided.

A container produced from the oxygen-absorbing multi-layered structure or the oxygen-absorbing laminated film of the present invention exhibits a high oxygen-absorbing performance, i.e., needs only a short time until an atmosphere within the container is deoxygenated, resulting in enhanced preservation effect for contents of the container.

## Claims

1. An oxygen-absorbing multi-layered structure comprising:
an oxygen-absorbing layer comprising a thermoplastic resin incorporated with an oxygen-absorbing composition; and
an oxygen-permeable layer comprising a thermoplastic resin formed on at least one surface of the oxygen-absorbing layer,
said oxygen-permeable layer being a stretched film comprising (A) a matrix polyolefin resin, (B) incompatible thermoplastic resin particles dispersed in the matrix polyolefin resin (A), and (C) inorganic powder, and said matrix polyolefin resin (A) and said incompatible thermoplastic resin (B) being combined so that said matrix polyolefin resin (A) has a melting point at least 50°C lower than that of the incompatible thermoplastic resin (B).

2. The oxygen-absorbing multi-layered structure according to claim 1, wherein the inorganic powder (C) has an average particle diameter smaller than that of the incompatible thermoplastic resin particles (B).

3. The oxygen-absorbing multi-layered structure according to claim 1, wherein the inorganic particles (C) have an average particle diameter of 0.001 to 10 µm.

4. The oxygen-absorbing multi-layered structure according to claim 1, wherein the inorganic powder (C) is added in an amount of 1 to 50% by weight based on the total weight of resin components.

5. The oxygen-absorbing multi-layered structure according to claim 1, wherein the inorganic powder (C) is titanium oxide powder.

6. The oxygen-absorbing multi-layered structure according to claim 1, wherein the incompatible thermoplastic resin particles (B) are dispersed with an average particle diameter of 0. 1 to 100 µm in the matrix-polyolefin resin (A).

7. The oxygen-absorbing multi-layered structure according to claim 1, wherein the incompatible thermoplastic resin (B) is added in an amount of 1 to 50% by weight based on the total weight of the resin components of the oxygen-permeable layer.

8. The oxygen-absorbing multi-layered structure according to claim 1, wherein the incompatible thermoplastic resin (B) is poly-4-methyl-penten-1.

9. The oxygen-absorbing multi-layered structure according to claim 1, wherein the oxygen-permeable layer has voids having an average length of 1 to 200 µm at the interface between the polyolefin resin (A) and the incompatible thermoplastic resin particles (B).

10. The oxygen-absorbing multi-layered structure according to claim 1, wherein the oxygen-permeable layer is formed by stretching at a temperature ranging from a temperature 30°C lower than a softening point of the matrix polyolefin resin (A) to a temperature 10°C higher than the softening point, and also being not higher than a softening point of the incompatible thermoplastic resin particles (B) to be dispersed.

11. A process for producing the oxygen-absorbing multi-layered structure according to claim 1, said oxygen-absorbing multi-layered structure comprising an oxygen-absorbing layer comprising a thermoplastic resin incorporated with an oxygen-absorbing composition; and an oxygen permeable layer comprising a thermoplastic resin formed on at least one surface of the oxygen-absorbing layer, said oxygen-permeable layer being a stretched film comprising (A) a matrix polyolefin resin, (B) incompatible thermoplastic resin particles dispersible in the matrix polyolefin resin (A), and (C) inorganic powder, and said matrix polyolefin resin (A) and said incompatible thermoplastic resin (B) being combined so that said matrix polyolefin resin (A) has a melting point at least 50°C lower than that of the incompatible thermoplastic resin (B),
wherein said process comprises a step of:
stretching the oxygen-permeable layer at a temperature ranging from a temperature 30°C lower than a softening point of the matrix polyolefin resin (A) to a temperature 10°C higher than the softening point, and also being not higher than a softening point of the incompatible thermoplastic resin (B) to be dispersed.

12. An oxygen-absorbing laminated film comprising the oxygen-absorbing multi-layered structure according to claim 1, and a gas-barrier layer laminated on the oxygen-absorbing layer of the oxygen-absorbing multi-layered structure.
